# EUROPÄISCHE PATENTSCHRIFT

(11) **EP 0 282 848 B1**
(45) Veröffentlichungstag und Bekanntmachung des Hinweises auf die Patenterteilung: **14.09.1994**
(21) Anmeldenummer: 88103425.0
(22) Anmeldetag: 05.03.1988
(51) Int. Cl.: B29C 67/22, B29B 9/06, C08J 9/16

(54) **Verfahren zur Herstellung von Polyolefinschaumstoffen**
Process for producing polyolefin foams
Procédé de production de mousses polyoléfiniques

(30) Priorität: 14.03.1987 DE 3708291
(43) Veröffentlichungstag der Anmeldung: 21.09.1988
(73) Patentinhaber: BASF Aktiengesellschaft, 67063 Ludwigshafen (DE)
(72) Erfinder: Tatzel, Hermann, D-6945 Hirschberg (DE); Zuern, Ludwig, Dr., D-6702 Bad Duerkheim (DE); Zettler, Hans Dieter, D-6718 Gruenstadt (DE); Schneider, Wolfberg, Dr., D-6900 Heidelberg (DE); Dembek, Gerhard, Dr., D-6702 Bad Duerkheim (DE)

(56) Entgegenhaltungen:
- EP-A- 0 095 109
- EP-A- 0 126 459
- CH-A- 646 096
- DE-A- 1 504 324
- GB-A- 1 059 426
- US-A- 2 387 730
- US-A- 3 194 854

## Beschreibung

Die Erfindung betrifft ein Verfahren zur Herstellung von Polyolefinschaumstoffen höherer Dichte, die Überwiegend pralle, geschlossene Zellen aufweisen und die nicht in unerwünschter Weise nachschrumpfen.

Es ist bekannt, Polyolefinschaumstoffe durch Entspannen eines erhitzten, unter Druck befindlichen homogenen Gemisches aus einem Polyolefin und einem flüchtigen Treibmittel herzustellen. In der Regel arbeitet man dabei in einer kontinuierlichen Mischvorrichtung unter Auspressen des Polyolefin-Treibmittel-Gels. Beim Entspannen in die Atmosphäre verdampft das Treibmittel unter Bildung eines weitgehend geschlossenzelligen Schaumstoffs. Nach diesem Verfahren, wie es beispielsweise in der DE-B 25 24 196 beschrieben wird, können nur Schaumstoffe im Dichtebereich unter 30 g/l erhalten werden, die anschließend in beträchtlichem MaBe schrumpfen. Versucht man durch Erniedrigung des Treibmittelgehalts des Gels die Schaumstoffdichte zu erhöhen, so reicht die Verdampfungswärme des Treibmittels beim Entspannen nicht aus, um das Polyolefin so stark abzukühlen, daß es sich verfestigt. Der Schaumstoff kollabiert daher.

Aus der US-A-2,387,730 ist ein Verfahren zur Herstellung korkartiger Produkte aus Ethylenpolymeren bekannt. Hierbei wird das Polymere in einem geschlossenen Behälter mindestens bis zu seinem Schmelzpunkt erhitzt und ein ursprünglich hoher Druck eines in der Polymerschmelze löslichen Gases ohne wesentliche Temperaturänderung während 0,2 bis 5 Minuten zunächst um mindestens 25 %, jedoch auf mehr als 20 pds/inch² reduziert. Anschließend wird die Polymerschmelze bei diesem Druck bis zur Verfestigung abgekühlt. Das dabei erhaltene korkartige Ethylenpolymere besitzt eine sehr einheitliche Porenstruktur aus diskreten Zellen, ist chemisch inert und alterungsbeständig.

Aufgabe der vorliegenden Erfindung war es, ein Verfahren zur Herstellung von Polyolefinscaumstoffpartikel zu entwickeln, die eine Dichte zwischen 30 und 300 g/l besitzen, die nicht in unerwünschter Weise nachschrumpfen und die überwiegend pralle, geschlossene Zellen aufweisen.

Erfindungsgemäß wird diese Aufgabe gelöst durch ein Verfahren zur Herstellung von Polyolefinschaumstoffpartikeln der Dichte 30 bis 300 g/l durch Entspannen eines homogenen Gemisches aus einem Polyolefin und 10 bis 50 Gew.-%, bezogen auf das Polyolefin, eines flünchtigen Treibmittels und ggf. üblicher Zusatzstoffe, das eine Temperatur aufweist, die 10°C bis 50°C unterhalb des DSC-Maximums des Polyolefins liegt, und unter einem Druck steht, der höher ist als der Dampfdruck des Treibmittels bei dieser Temperatur, das dadurch gekennzeichnet ist, daß die Entspannung des Gemisches durch Extrusion durch eine Düse erfolgt und der die Extrusionsvorrichtung verlassende Strang nach dem Düsenaustritt durch eine übliche Abschlagsvorrichtung vor oder nach dem Aufschäumen zu Partikeln zerkleinert wird und man vor dem Entspannen auf Atmosphärendruck zunächst auf einen Druck von 0,1 bis 10 bar Überdruck entspannt und den dabei erhaltenen Schaumstoff solange unter diesem Druck hält, bis er auf eine Temperatur abgekühlt ist, die mindestens 20°C unterhalb der Verschäumungstemperatur liegt.

Polyolefine im Sinne der Erfindung sind kristalline Olefinpolymerisate, deren Röntgenkristallinität bei 25°C über 25 % liegt. Für das Verfahren eignen sich Polyethylene niedriger, mittlerer und hoher Dichte, beispielsweise der Dichte 0,916 bis 0,965, vorzugsweise 0,920 bis 0,935 g/cm³, wie sie nach Hoch-, Nieder- und Mitteldruckverfahren hergestellt werden, Polypropylen sowie Ethylen- und Propylencopolymere, die mindestens 50 Mol-% Ethylen-und/oder Propylen-Einheiten enthalten. Geeignete Comonomere sind beispielsweise α-Alkene mit bis zu 12 Kohlenstoffatomen, wie Propylen, Buten Penten, Hexen, Octen, ferner Vinylester, wie Vinylacetat, Ester der Acrylsäure, Methacrylsäure, Maleinsäure oder Fumarsäure von Alkoholen, die 1 bis 8 C-Atome enthalten. Die Polyolefine besitzen im allgemeinen einen Schmelzindex zwischen 0,3 und 8, vorzugsweise zwischen 1 und 3 und einen Schmelzbereich zwischen 100°C und 170°C, sowie eine Scherviskosität zwischen 1 x 10³ und 1 x 10⁶, gemessen in einem Rotationsviskosimeter bei 150°C und einem Kreisfrequenzbereich von 10-² bis 10²s-¹. Auch Mischungen verschiedener Polyolefine können verwendet werden. Bevorzugt eingesetzt werden Ethylenhomo- und Copolymere, die in der Polymerkette pro 100 C-Atome 1 bis 5 Seitenketten tragen, wie handelsübliche LDPE-, LLDPE- und HDPE-Typen.

Auch alle anderen gemäß dem Stand der Technik für die Schaumstoffherstellung generell geeigneten Olefinpolymerisate sind für das vorliegende Verfahren verwendbar.

Als flüchtige Treibmittel werden Kohlenwasserstoffe und Halogenkohlenwasserstoffe verwendet, deren Siedepunkt bei Normaldruck zwischen -40 und 80°C liegt. Geeignet sind verzweigte und unverzweigte aliphatische und alicyclische Kohlenwasserstoffe wie Propan, Propen, Butan, Buten, Pentan, Penten, Hexan, Hexen, Heptan, Cyclobutan, Cyclopentan, Cyclohexan, sowie Halogenkohlenwasserstoffe, wie Trichlorfluormethan, Dichlordifluormethan, Monochlordifluormethan, Trichlortrifluorethan, Dichlortetrafluorethan, Methylchlorid, Methylenchlorid, Ethylchlorid und Ethylenchlorid. Auch Treibmittelgemische können verwendet werden. Das Treibmittel wird in einer Menge von 10 bis 50, beispielsweise 15 bis 45, vorzugsweise 20 bis 40 Gew.-%, bezogen auf das Polyolefin, verwendet.

Das zu entspannende Gemisch aus Polyolefin und Treibmittel kann ggf. übliche Zusatzstoffe in üblichen Mengen enthalten, wie Pigmente. Farbstoffe, Füllstoffe, Flammschutzmittel, Antistatika, Stabilisatoren, Gleitmittel, Weichmacher und Keimbildner.

Durch die Mitverwendung von Keimbildnern kann die Zellgröße reguliert werden. Geeignete Keimbildner sind aus dem Stand der Technik bekannt. Geeignet sind beispielsweise Talkum, Calciumcarbonat, Calciumsulfat, Diatomeenerde, Magnesiumcarbonat, Magnesiumhydroxid, Magnesiumsulfat, Tonerde und Bariumsulfat.

Man benutzt den Keimbildner im allgemeinen in Mengen von 0,05 bis 5, vorzugsweise 0,5 bis 2 Gew.-%, bezogen auf das Polyolefin.

Zur Herstellung der Schaumstoffpartikel (im folgenden auch mit "Schaumstoff" abgekürzt) geht man von einem homogenen Gemisch aus Polyolefin, Treibmittel und ggf. Zusatzstoffen aus. Das Treibmittel soll dabei im Polyolefin in gelöster oder feinst dispergierter Form vorliegen. Die Herstellung des Gemisches erfolgt im allgemeinen in einer üblichen Mischvorrichtung, z.B. in einem Extruder. Sie kann aber auch durch Imprägnieren des Polyolefins mit dem Treibmittel in einem üblichen Druckgefäß erfolgen.

Die Verschäumungstemperatur, d.h. die Temperatur des Polyolefin-Treibmittel-Gemisches unmittelbar vor dem Entspannen, liegt 10°C bis 50°C , vorzugsweise 20 bis 30°C unterhalb des DSC-Maximums des Polyolefins. Bekanntlich wird der Schmelzpunkt des Polyolefins durch das darin gelöste Treibmittel erniedrigt. Die Verschäumungstemperatur muß daher auch oberhalb des Erweichungspunkts des Gemisches liegen. Die optimale Temperatur läßt sich für jedes Gemisch leicht durch Vorversuche ermitteln.

Vor dem Entspannen steht das Treibmittel-Polymer-Gemisch unter einem Druck, der höher ist als der Dampfdruck des Treibmittels bei der Verschäumungstemperatur. Der Druck liegt beispielsweise bei 10 bis 100 bar, insbesondere 30 bis 70 bar Überdruck.

Erfindungswesentlich ist es, daß die Entspannung des Gemisches durch Extrusion durch eine Düse erfolgt und der die Extrusionsvorrichtung verlassende Strang nach dem Düsenaustritt durch eine übliche Abschlagvorrichtung vor oder nach dem Aufschäumen zu Partikeln zerkleinert wird und das Polyolefin-Treibmittel-Gel vor dem Entspannen auf Atmosphärendruck zunächst auf 0,1 bis 10, vorzugsweise 0,5 bis 5, insbesondere 0,5 bis 2 bar Überdruck entspannt wird und der erhaltene Schaumstoff so lange unter diesem Druck gehalten wird, bis er auf eine Temperatur abgekühlt ist, die mindestens 20°C, vorzugsweise mindestens 30°C, unterhalb der Verschäumungstemperatur liegt. Der Schaumstoff verfestigt sich dabei. Die optimale Temperatur und Verweilzeit läßt sich leicht durch Vorversuche ermitteln. Liegt die Temperatur beim Entspannen auf Normaldruck zu hoch, so bläht der Schaumstoff weiter auf und schrumpft anschließend beim Lagern, so daß er keine prallen Zellen mehr aufweist, oder aber der Schaumstoff reißt unter Nachblähen auf. Wichtig ist dabei, daß auch das Innere des Schaumstoffs genügend abgekühlt und verfestigt ist.

Die Zellen des Schaumstoffs stehen nach dem Entspannen auf Normaldruck unter einem erhöhten Treibgasdruck. Das Gas permeiert anschließend langsam in die Atmosphäre, während gleichzeitig Luft bzw. das Umgebungsgas in die Zellen eindringt. Durch die erfindungsgemäße Verfahrensführung wird überraschenderweise ein Schrumpfen des Schaumstoffs während des Lagerns weitgehend verhindert. Bedingt durch die höhere Dichte des Schaumstoffs ist seine Festigkeit genügend hoch, um auch in der Phase, in der zwischenzeitlich, bedingt durch eine höhere Permeationsgeschwindigkeit des Treibmittels im Vergleich zu Luft oder Stickstoff ein Unterdruck in den Zellen entsteht, dem Außendruck zu widerstehen.

Durch die Variation des Drucks in der ersten Entspannungsphase läßt sich die Schaumstoffdichte einstellen. Je höher der Druck, desto höher ist die Dichte. So lassen sich alle Bereiche von 30 bis 300 g/l verwirklichen.

Zweckmäßig legt man in der Druckentspannungskammer eine Luft- oder Stickstoffatmosphäre vor. Bedingt durch die Permeation des Treibmittels, reichert sich das Treibgas dann in der Druckkammer an. Man kann aber auch das unter den Druck- und Temperaturbedingungen in der Druckentspannungskammer gasförmige Treibmittel vorlegen. Der Druck in der Kammer wird vorteilhaft konstant oder weitgehend konstant gehalten. Das aus dem Schaumstoff entweichende Treibmittel kann dadurch leicht zurückgewonnen und wiederverwendet werden.

Es ist vorteilhaft, den Schaumstoff in der ersten Entspannungsphase relativ langsam abzukühlen, zweckmäßig mit einem Temperaturgradienten von 0,5 bis 5°C/Min.. Dadurch werden gleichzeitig Spannungen in den Zellwänden abgebaut und der Schaumstoff erhält eine verbesserte Temperaturbeständigkeit. Die Verweilzeit in der Druckentspannungszone kann in weiten Grenzen, etwa zwischen 0,5 und 60 Min. schwanken.

Beim anschließenden Entspannen auf Atmosphärendruck, zweckmäßig in eine Luft- oder Stickstoffatmosphäre, tritt keine oder allenfalls eine geringfügige Nachexpansion auf, die weniger als 10 Vol.-% beträgt und die weitgehend reversibel ist, d,h. beim Lagern sich zurückbildet. Der erhaltene Schaumstoff hat eine Dichte zwischen 30 und 300 g/l, vorzugsweise zwischen 35 und 100, insbesondere 40 bis 80 g/l.

Das erfindungsgemäße Verfahren dient zur Herstellung von Schaumstoffpartikeln, beispielsweise mit einem Durchmesser von 1 bis 50, insbesondere 5 bis 20 mm. Dazu wird der die Extrusionsvorrichtung verlassende Strang nach dem Düsenaustritt durch eine übliche Abschlagvorrichtung vor oder nach dem Aufschäumen zu Partikeln zerkleinert. Die erhaltenen Schaumstoffpartikel können anschließend in üblicher Weise in einer nicht gasdicht schließenden Formn durch Erhitzen in bekannter Weise zu Formkörpern versintert werden. Die Partikel können vor dem Verschweißen zu Formkörpern in üblicher Weise durch energiereiche Strahlen vernetzt werden. Überraschenderweise gelingt aber die Herstellung von Formkörpern, die dimensionsstabil sind und eine glatte Oberfläche aufweisen, auch mit unvernetzten gemäß der Erfindung hergestellten Schaumstoffpartikeln.

Die erhaltenen Schaumstoffe haben pralle Zellen mit einem Durchmesser etwa zwischen 0,01 und 1 mm, je nach Art und Menge des ggf. mitverwendeten Keimbildners. Schaumstoffe höherer Dichte weisen dabei in der Regel kleinere Zellen auf als Schaumstoffe niederer Dichte.

### Beispiel 1

In einem Doppelschneckenextruder (L/D = 40) wird ein Ethylenhomopolymerisat (100 Gewichtsteile). das nach dem Hochdruckverfahren hergestellt wurde und eine Dichte von 0,920 besitzt, mit 1 Gew.-Teil Talkum und 30 Gew.-Teilen Dichlortetrafluorethan unter Druck gemischt. Das Polyolefin-Treibmittel-Gel wird im Extruder auf ca. 87°C (ca. 20°C unter dem DSC-Maximum (107°C) des Polyolefins) abgekühlt und durch eine Lochdüse, vor der ein rotierender Messerstern angeordnet ist, in eine Kammer, die unter 4 bar Überdruck steht, entspannt. Nach einer Abkühlzeit von 10 min, während der sich der Schaumstoff auf 50°C abgekühlt hat, wird auf Atmosphärendruck entspannt. Es werden äußerst pralle nicht schrumpfende Schaumstoffteilchen (Durchmesser 12 mm, Zellgröße 0,2 mm) erhalten, die eine Dichte von 120 g/l aufweisen.

Erfolgt der Aufschäumvorgang unter Atmosphärendruck, so erhält man Schaumstoffteilchen der Dichte 25 g/l, die sehr stark schrumpfen und keine prallen Zellen aufweisen.

### Beispiel 2

Man verfährt, wie im Beispiel 1 angegeben, setzt jedoch als Treibmittel statt Dichlortetrafluorethan 40 Gew.-Teile Dichlordifluormethan ein und preßt die treibmittelhaltige Schmelze durch eine Mehrlochdüse in einen Raum mit 2 bar Überdruck, läßt den Schaumstoff dort 6 min verweilen, bis er auf 50°C abgekühlt ist, und entspannt dann auf Normaldruck.

Der dabei resultierende Schaumstoff hat eine Dichte von 52 g/l, besitzt eine glatte Oberfläche und ist dimensionsstabil.

Wird die treibmittelhaltige Schmelze unmittelbar nach Verlassen der Düse in der üblichen Weise auf Atmosphärendruck entspannt, so wird ein Schaum mit einer Dichte von 23 g/dm³ erhalten, der bereits nach einem Tag Lagerung eine Volumenänderung von annähernd 50 % und eine gefaltete Oberfläche aufweist.

Die erfindungsgemäßen Schaumstoffteilchen können in üblicher Weise und zwar ohne Strahlenvernetzung zu Formteilen der Dichte 65 g/l verarbeitet werden.

### Beispiel 3

In einem Einschneckenextruder (L/D = 20), dem ein zweiter Einwellenextruder nachgeschaltet ist, werden 100 Teile eines LLDPE mit breiter Molmassenverteilung und einer Dichte von 0,922 g/cm³, einem Melt Index (190/2,16) von 1,2 g/10 min, einer mittleren Molmasse von 115 000, einer Kristallinität von 45 %, einem Comonomerengehalt von 8,3 Gew.-% Buten-1, eine: DSC-Maximum von 126°C, zwei Seitenverzweigungen pro 100 C-Atome und einer Viskosität von 4 x 10³ Pa.s gemessen bei 190°C und einer Schergeschwindigkeit von 10 s-¹, mit 0,3 Teile Talkum als Zellenregulator und 35 Teilen Difluordichlormethan, das unter einem Druck von 60 bar zudosiert wird, homogen bei 185°C vermischt und im 2. Extruder auf 100°C abgekühlt. Das unter einem Druck von 60 bar stehende Polyolefin-Treibmittel-Gemisch wird durch eine Mehrlochdüse in eine Kammer mit 0,8 bar Überdruck entspannt und dabei mit einem unmittelbar zu der Düse befindlichen Messerstern zu Schaumpartikeln mit einem Durchmesser von 9 mm und einem L/D von 1 abgehackt.

Nach einer Verweilzeit in der Überdruckkammer von 5 min, während der die Schaumpartikeln von 86°C (Temperatur nach der Verschäumung) auf 70°C abkühlen, wird auf Atmosphärendruck entspannt. Dabei werden pralle Schaumpellets mit einer Dichte von 40 g/dm³ erhalten

Erfolgt vergleichsweise dazu der Aufschäumvorgang unter Atmosphärendruck, so werden Schaumteilchen mit 26 g/dm³ erhalten, die jedoch stark nachschrumpfen.

Die prallen Schaumpartikeln mit einer Dichte von 40 g/dm³ werden unter einem Fülldruck von 0,6 bar in eine aus zwei Halbschalen bestehende geschlossene Form überführt, mit 1,5 bar Dampf 3,5 sec. beaufschlagt und dabei punktförmig verbunden. Nach dem Entspannen des Dampfes verschweißen die Schaumperlen vollends. Nach intensiver Kühlung von 70 sec. wird der Schaumkörper aus der Form entnommen. Man erhält einen Schaum mit einer Dichte von 55 g/dm³, der beispielsweise als Kantenschutz im Verpackungssektor Verwendung findet und sich durch hervorragendes Polsterverhalten auszeichnet.

## Patentansprüche

1. Verfahren zur Herstellung von Polyolefinschaumstoffpartikeln der Dichte 30 bis 300 g/l durch Entspannen eines homogenen Gemisches aus einem Polyolefin und 10 bis 50 Gew.-%, bezogen auf das Polyolefin, eines flünchtigen Treibmittels und gegebenenfalls üblicher Zusatzstoffe, das eine Temperatur aufweist, die 10°C bis 50°C unterhalb des DSC-Maximums des Polyolefins liegt, und unter einem Druck steht, der höher ist als der Dampfdruck des Treibmittels bei dieser Temperatur, dadurch gekennzeichnet, daß die Entspannung des Gemisches durch Extrusion durch eine Düse erfolgt und der die Extrusionsvorrichtung verlassende Strang nach dem Düsenaustritt durch eine übliche Abschlagvorrichtung vor oder nach dem Aufschäumen zu Partikeln zerkleinert wird und man vor dem Entspannen auf Atmosphärendruck zunächst auf einen Druck von 0,1 bis 10 bar Überdruck entspannt und den dabei erhaltenen Schaumstoff solange unter diesem Druck hält, bis er auf eine Temperatur abgekühlt ist, die mindestens 20°C unterhalb der Verschäumungstemperatur liegt.

2. Verfahren nach Anspruch 1, dadurch gekennzeichnet, daß die Entspannung in einer Atmosphäre aus Luft oder Stickstoff erfolgt.

3. Verfahren nach Anspruch 1 bis 2, dadurch gekennzeichnet, daß man zunächst auf einen Druck von 0,5 bis 5 bar Überdruck entspannt.

4. Verfahren nach Anspruch 1 bis 3, dadurch gekennzeichnet, daß man durch Mitverwendung eines Keimbildners die Zellgröße des Schaumstoffs auf 0,01 bis 1 mm reguliert.

5. Verfahren nach Anspruch 1 bis 4, dadurch gekennzeichnet, daß man Schaumstoffpartikel mit einem mittleren Durchmesser von 1 bis 50 mm herstellt.

## Claims

1. A process for the preparation of polyolefin foam particles having a density of from 30 to 300 g/l by letting down a homogeneous mixture of a polyolefin and from 10 to 50 % by weight, based on the polyolefin, of a volatile blowing agent with or without conventional additives, the said mixture being 10-50°C below the DSC maximum of the polyolefin and under a pressure which is higher than the vapor pressure of the blowing agent at this temperature, wherein the mixture is let down by extrusion through a die and the extrudate leaving the extrusion apparatus is comminuted after emerging from the die by means of a conventional face cutting apparatus before or after expansion to give particles, and, before being let down to atmospheric pressure, the mixture is first let down to 0.1-10 bar gage pressure and the resulting foam is kept at this pressure until it has cooled to a temperature which is at least 20°C below the expansion temperature.

2. A process as claimed in claim 1, wherein the mixture is let down in an atmosphere of air or nitrogen.

3. A process as claimed in claim 1 or 2, wherein the mixture is first let down to 0.5-5 bar gage pressure.

4. A process as claimed in any of claims 1 to 3, wherein the cell size of the foam is regulated at 0.01-1 mm by the concomitant use of a nucleating agent.

5. A process as claimed in any of claims 1 to 4, wherein foam particles having a mean diameter of from 1 to 50 mm are prepared.

## Revendications

1. Procédé de fabrication de particules de polyoléfine alvéolaires de densité 10 à 300 g/l par détente d'un mélange homogène d'une polyoléfine et de 10 à 50 % en poids, rapportées à la polyoléfine, d'un gonflant volatil et éventuellement d'additifs usuels, qui possède une température située 10°C à 50°C en dessous du DSC maximum de la polyoléfine et sous une pression qui est supérieure à la pression de vapeur du gonflant à cette température, caractérisé par le fait que la détente du mélange s'opère par extrusion à travers une buse et le boudin quittant la machine d'extrusion après la sortie de la buse est réduit en particules, avant ou après expansion, par un dispositif de coupe usuel et, avant la détente à la pression atmosphérique, on détend d'abord à une pression effective de 0,1 à 10 bar et on maintient la matière alvéolaire ainsi obtenue suffisamment longtemps sous cette pression pour qu'elle soit refroidie à une température située au moins 25°C en dessous de la température d'expansion.

2. Procédé selon la revendication 1, caractérisé par le fait que la détente s'opère en atmosphère d'air ou d'azote.

3. Procédé selon la revendication 1 ou 2, caractétisé par le fait que l'on détend d'abord à une pression effective de 0,5 à 5 bar.

4. Procédé selon la revendication 1 à 3, caractérisé par le fait que l'on régularise, par co-utilisation d'un formateur de germes, la grosseur des cellules de la matière alvéolaire à 0,01 à 1 mm.

5. Procédé selon la revendication 1 à 4, caractérisé par le fait que l'on fabrique des particules alvéolaires d'un diamètre moyen de 1 à 50 mm.
